# EUROPÄISCHE PATENTANMELDUNG

(11) **EP 1 215 637 A2**
(43) Veröffentlichungstag der Anmeldung: **19.06.2002**
(21) Anmeldenummer: 01890116.5
(22) Anmeldetag: 19.04.2001
(51) Int. Cl.: G07F 19/00, G07F 7/08

(54) **Vorrichtung zur Übertragung von Finanzwerten zwischen Teilnehmern eines Telekommunikationsnetzes**

(30) Priorität: 29.11.2000 AT 8762000
(71) Anmelder: Mobilkom Austria Aktiengesellschaft & Co KG, 1020 Wien (AT)
(72) Erfinder: Peter, Bernd, 1150 Wien (AT); Brandl, Roman, 1140 Wien (AT)
(74) Vertreter: Weiser, Andreas, Dipl.-Ing.

(57) **Zusammenfassung**

Die Erfindung betrifft eine Vorrichtung zur Übertragung von Finanzwerten ($) zwischen Teilnehmern (A, B) eines Telekommunikationsnetzes (1), das zumindest ein Mobilfunknetz (2) umfaßt, in welchem Textmitteilungen (14, 14') auf ihrem Weg vom sendenden Teilnehmer (A) zum empfangenden Teilnehmer (B) eine Textmitteilungszentrale (12, SC) des Mobilfunknetzes (2) durchlaufen, mit einer Kontoführungseinrichtung (18), welche den Teilnehmern (A, B) Konten (19, 20) für Finanzwerte ($) in Eigentümerbeziehung zuordnet, und einer Detektionseinrichtung (17), die den Durchlauf der Textmitteilungen (14, 14'), durch die Textmitteilungszentrale (12) überwacht, eine vorgebbare Kennung ($) einer Textmitteilung detektiert, und im Detektionsfall die Kontoführungseinrichtung (18) zu einer Übertragung eines vorgebbaren Finanzwertes ($) vom Konto (19) des diese Textmitteilung (14, 14') sendenden Teilnehmers (A) zum Konto (20) des diese Textmitteilung empfangenden Teilnehmers (B) ansteuert. Die Erfindung betrifft auch ein Verfahren und Programmlogiken.

## Beschreibung

Die vorliegende Erfindung betrifft eine Vorrichtung zur Übertragung von Finanzwerten zwischen Teilnehmern eines Telekommunikationsnetzes, das zumindest ein Mobilfunknetz umfaßt, in welchem Textmitteilungen auf ihrem Weg vom sendenden Teilnehmer zum empfangenden Teilnehmer eine Textmitteilungszentrale des Mobilfunknetzes durchlaufen, mit einer Kontoführungseinrichtung, welche den Teilnehmern Konten für Finanzwerte in Eigentümerbeziehung zuordnet. Die Erfindung betrifft ferner ein entsprechendes Verfahren sowie Computerprogramme, welche die Vorrichtung bzw. das Verfahren implementieren.

Systeme zum Übertragen von Finanzwerten in einem Telekommunikationsnetz sind der Angelpunkt der aufstrebenden e-und m-Commerce-Technologie. Auch wenn es bereits zahlreiche Vorschläge und Lösungen auf diesem Gebiet gibt, besteht ein ungebrochener Bedarf nach sicheren und bedienungsfreundlichen Finanztransaktionssystemen. Die Erfindung setzt sich zum Ziel, Vorrichtungen, Verfahren und Computerprogramme für ein Finanztransaktionssystem für Telekommunikationsnetze zu schaffen.

In einem Aspekt wird dieses Ziel mit einer Vorrichtung der eingangs genannten Art erreicht, die sich gemäß der Erfindung auszeichnet durch eine Detektionseinrichtung, die den Durchlauf der Textmitteilungen durch die Textmitteilungszentrale überwacht, eine vorgebbare Kennung einer Textmitteilung detektiert, und im Detektionsfall die Kontoführungseinrichtung zu einer Übertragung eines vorgebbaren Finanzwertes vom Konto des diese Textmitteilung sendenden Teilnehmers zum Konto des diese Textmitteilung empfangenden Teilnehmers ansteuert.

Die Erfindung beruht auf einem neuartigen Einsatz von Textmitteilungen in textmitteilungsfähigen Mobilfunksystemen, z.B. von SMS-Nachrichten in GSM-Systemen. Die Textmitteilungen bzw. SMS-Nachrichten werden *selbst* als Finanzwert betrachtet, der gleichzeitig mit der Textmitteilungsübertragung vom Sender zum Empfänger der Textmitteilung *übertragen* wird. Zu diesem Zweck wird die Textmitteilungszentrale des Mobilfunknetzes zu einer kombinierten Textmitteilungs- und Kontoführungszentrale erweitert, mit einem Parallelführungsmechanismus zwischen Durchlauf einer Textmitteilung und Übertragung ihres Finanzwertes. Die erfindungsgemäße Detektionseinrichtung spricht auf das Auftreten einer bestimmten Kennung an, welche eine Textmitteilung als finanzwertbehaftet ausweist, und veranlaßt in diesem Fall eine parallele Finanzwertumbuchung in der Kontoführungseinrichtung.

Unter dem Begriff "Textmitteilung" wird in der vorliegenden Beschreibung an sich jede Art von Datensatz, Datentelegramm usw. verstanden, z.B. auch Bilddaten, Sprachdaten od. dgl., je nach Fähigkeit des Mobilfunknetzes. Besonders vorteilhaft ist es jedoch, wenn das Mobilfunknetz ein GSM-System ist, die Textmitteilungen SMS-Nachrichten des GSM-Systems sind, und die Textmitteilungszentrale die SMS-Dienstzentrale des GSM-Systems ist. Solche SMS-Nachrichten sind mit handelsüblichen Mobiltelefonen besonders einfach handhabbar und in breiter Verwendung.

Eine bevorzugte Ausführung der Erfindung, bei welcher das Telekommunikationsnetz oder das Mobilfunknetz von den Teilnehmern Gebühren einhebt und dazu ohnehin eine Kontoführungs-einrichtung für Gebührenkonten aufweist, zeichnet sich dadurch aus, daß die Kontoführungseinrichtung für die Finanzwertkonten durch ebendiese Kontoführungseinrichtung für die Gebührenkonten gebildet ist. Die bestehende Infrastruktur zur Verrechnung der Gebühren und Führung entsprechender Gebührenkonten der Teilnehmer eines Mobilfunknetzes kann dadurch mitverwendet werden.

Die Kennung, welche eine SMS-Nachricht als eine solche mit Finanzwert kennzeichnet, kann beliebig gestaltet sein. Beispielsweise kann sie im Textteil der Textmitteilung enthalten sein. Alternativ kann sie im Adreßteil der Textmitteilung enthalten sein; z. B. in Form einer Nebenstellendurchwahl des empfangenden Teilnehmers, in Form eines speziell reservierten Adreß- oder Telefonnummernbereiches des Telekommunikationsnetzes, usw.

Auch der Finanzwert kann auf beliebige Weise angegeben werden, bevorzugt durch den Textteil der Textmitteilung oder alternativ durch den Adreßteil der Textmitteilung; z. B. stellen die Endziffern einer Telefonnummer im Adreßteil den Finanzwert der Textmitteilung bzw. SMS-Nachricht dar.

In einem zweiten Aspekt schafft die Erfindung ein Verfahren zum Übertragen von Finanzwerten zwischen Teilnehmern eines Telekommunikationsnetzes, das zumindest ein Mobilfunknetz umfaßt, in welchem Textmitteilungen auf ihrem Weg vom sendenden Teilnehmer zum empfangenden Teilnehmer eine Textmitteilungszentrale des Mobilfunknetzes durchlaufen, wobei den Teilnehmern Konten für Finanzwerte in Eigentümerbeziehung zugeordnet werden, mit den Schritten:
- (a): Empfangen einer Textmitteilung in der Textmitteilungszentrale,
- (b): Detektieren einer vorgebbaren Kennung in der empfangenen Textmitteilung, und
- (c): im Detektionsfalle, Übertragen eines vorgebbaren Finanzwertes vom Konto des diese Textmitteilung sendenden Teilnehmers zum Konto des diese Textmitteilung empfangenden Teilnehmers.

Bevorzugt umfaßt die Textmitteilung einen persönlichen Code des sendenden Teilnehmers und das genannten Übertragen wird nur nach einem Detektieren und erfolgreichen Verifizieren des Codes durchgeführt. Dadurch kann zusätzliche Sicherheit für den sendenden Teilnehmer geschaffen werden.

Besonders vorteilhaft ist es auch, wenn gemäß einem weiteren Merkmal der Erfindung das genannte Übertragen nur nach vorherigem Senden einer rückfragenden Textmitteilung und Empfangen einer bestätigenden Textmitteilung vom genannten sendenden und/oder empfangenden Teilnehmer durchgeführt wird.

Die Bestätigung kann sowohl vom sendenden Teilnehmer kommen, daß die Finanzwertübertragung tatsächlich gewünscht wird, oder vom empfangenden Teilnehmer, daß der Empfang eines Finanzwertes gestattet wird, oder kann der Bedingung unterliegen, daß beide Teilnehmer zustimmen bzw. bestätigen.

Auch kann die Finanzwertübertragung davon abhängig gemacht werden, daß der ersten, den Finanzwert darstellenden Textmitteilung eine zweite, stornierende Textmitteilung folgt oder nicht. Das erfindungsgemäße Verfahren umfaßt demgemäß in einer Variante die weiteren Schritte
- Empfangen einer weiteren Textmitteilung in der Textmitteilungszentrale,
- Detektieren eines in der weiteren Textmitteilung enthaltenen Stornierungsbefehles hinsichtlich der genannten Textmitteilung, und
- im Detektionsfalle, Rückübertragen des genannten Finanzwertes vom Konto des genannten empfangenden Teilnehmers zum Konto des genannten sendenden Teilnehmers.

Bevorzugt wird das genannte Rückübertragen nur innerhalb einer vorgegebenen Zeitspanne im Anschluß an das Empfangen der genannten Textmitteilung durchgeführt.

Es versteht sich, daß anstelle der beschriebenen Rückübertragung auch vorgesehen werden kann, daß die Finanzwertübertragung um eine vorgegebene Zeitspanne aufgeschoben wird, und nur dann, wenn innerhalb dieser Zeitspanne keine stornierende Textmitteilung einlangt, oder gerade eine bestätigende Textmitteilung einlangt, die Finanzwertübertragung durchgeführt wird.

In jedem Fall ist es besonders günstig, wenn in einem weiteren Schritt eine Bestätigung über das durchgeführte Übertragen oder Rückübertragen an den sendenden und/oder empfangenden Teilnehmer in Form einer Textmitteilung gesendet wird.

Die Erfindung schafft in einem dritten Aspekt Computerprogramme, welche die offenbarte Vorrichtung bzw. das offenbarte Verfahren implementieren.

Weitere Merkmale und Vorteile der Erfindung ergeben sich aus den Unteransprüchen und der folgenden Beschreibung bevorzugter Ausführungsformen, welche auf die begleitenden Zeichnungen bezug nimmt, in denen Fig. 1 ein Blockschaltbild der Vorrichtung der Erfindung zeigt, Fig. 2 ein Flußdiagramm des Verfahrens der Erfindung und Fig. 3 ein Sequenz- bzw. Interaktionsdiagramm der Vorrichtung, des Verfahrens und der Programmlogik der Erfindung zeigt.

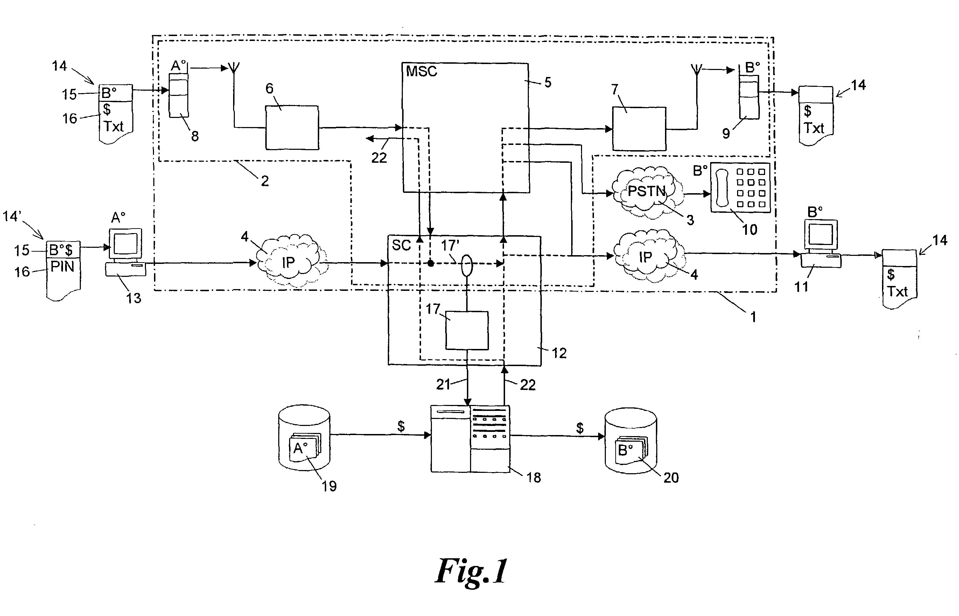

In Fig. 1 ist ein Telekommunikationsnetz 1 gezeigt, welches ein Mobilfunknetz 2, ein öffentliches Telefonnetz 3 und, stellvertretend für ein beliebiges Datennetz, das Internet 4 umfaßt.

Das Mobilfunknetz 2 ist zur Weiterleitung von Textmitteilungen befähigt. In dem gezeigten Beispiel arbeitet das Mobilfunknetz 2 nach dem GSM-Standard und die Textmitteilungen sind SMS-Nachrichten. Die technischen Grundlagen und Normen für den SMS-Nachrichtendienst des GSM-Standards sind in den ETSI-Spezifikationen Nr. ETS 300 536 (GSM 03.40: Point-to-Point-Protocol) und ETS 300 537 (GSM 03.41: Cell Broadcast SMS) definiert. Es versteht sich, daß alles, was hier in Bezug auf den GSM-Standard gesagt wird, auf beliebige andere Arten von Mobilfunknetzen anwendbar ist, welche die Weiterleitung von Textmitteilungen, Datennachrichten, Informationstelegrammen usw. ermöglichen.

Das Mobilfunknetz 2 ist mit einer Vermittlungsstelle 5 (Mobile Services Switching Center, MSC) ausgestattet, welche zwischen Zellen-Sendeempfängern 6, 7 vermittelt, in deren Funkbedeckungsbereich (Zelle) sich Mobiltelefone 8, 9 bewegen, sodaß Verbindungen zwischen den Mobiltelefonen 8, 9 aufgebaut oder Daten, Textmitteilungen usw. ausgetauscht werden können.

Die Vermittlungsstelle 5 des Mobilfunknetzes 2 steht auch mit dem öffentlichen Telefonnetz 3 und/oder dem Internet 4 in Verbindung, sodaß Verbindungen oder Datensendungen auch zwischen Mobiltelefonen 8, 9, Festnetztelefonen 10 und/oder Computern 11 vermittelt werden können.

Das Mobilfunknetz 2 weist eine Textmitteilungszentrale 12 (Sevice Center, SC) auf, welche z. B. entsprechend der GSM-Spezifikation SMS-Nachrichten von einer beliebigen SMS-Nachrichtenquelle empfängt, temporär speichert, die Verfügbarkeit des Empfängers überprüft und mit Hilfe der Vermittlungsstelle 5 an den Empfänger weiterleitet. Eine solche SMS-Nachrichtenquelle kann z. B. das Mobiltelefon 8, das Festnetztelefon 10 (bei entsprechender Tastwahleingabe), ein an die Textmitteilungszentrale 12 direkt oder über das Internet 4 angeschlossener Rechner sein, z.B. ein Computer 13, usw.

Mit 14 ist eine Textmitteilung, hier eine SMS-Nachricht, angedeutet, welche vom Mobiltelefon 8 zum Mobiltelefon 9 gesendet wird und mit einem Finanzwert behaftet ist. Die SMS-Nachricht 14 setzt sich aus einem Adreßteil 15 und einem Textteil 16 zusammen. Der Adreßteil 15 enthält eine Adresse B° des die Textmitteilung 14 empfangenden Mobiltelefones 9 (oder Festnetztelefones 10, Computers 11 usw.) z.B. eine Telefonnummer, IP-Adresse usw. Der Textteil 16 der SMS-Nachricht 14 gibt den Finanzwert $ der SMS-Nachricht 14 an, gefolgt von einem optionalen Text TXT.

Die Textmitteilungszentrale 12 weist eine Detektionseinrichtung 17 auf, welche den Durchlauf 17' von SMS-Nachrichten 14 darauf überwacht, ob sie eine vorgegebene Kennung aufweisen, welche sie als finanzwertbehaftet kennzeichnet. Die vorgegebene Kennung kann z.B. die Angabe $ des Finanzwertes sein.

Die vorgegebene Kennung $ muß nicht notwendigerweise in einer Angabe der Höhe des Finanzwertes $ bestehen, im einfachsten Fall genügt ein einziges Flag (1 Bit). In diesem Fall gibt die Kennung $ nur an, ob die SMS-Nachricht 14 einen Finanzwert darstellt oder nicht.

An die Detektionseinrichtung 17 ist eine Kontoführungseinrichtung 18 angeschlossen, welche Konten 19, 20 führt, die zumindest den Teilnehmern des Mobilfunknetzes 2 zugeordnet sind und Finanzwerte in Eigentümerbeziehung zu den Teilnehmern verwalten kann.

Sobald die Detektionseinrichtung 17 das Auftreten einer Kennung $ in einer SMS-Nachricht 14 detektiert, setzt sie einen Steuerungsbefehl 21 an die Kontoführungseinrichtung 18 ab, welcher z.B. eine Angabe A° über den Absender der SMS-Nachricht 14, eine Angabe B° über den Empfänger der SMS-Nachricht 14 und eine Angabe über die Höhe des Finanzwertes der SMS-Nachricht 14 umfaßt, z.B. die Kennung $. Die Kontoführungseinrichtung 18 überträgt den angegebenen Finanzwert $ vom Konto 19 des die SMS-Nachricht 14 sendenden Teilnehmers zum Konto 20 des die SMS-Nachricht empfangenden Teilnehmers. Die Finanzwertübertragung kann mittels Umbuchung erfolgen oder z.B. dadurch, daß Finanzwerte mit einer Eigentümerkennung versehen und in die entsprechende Eigentümerbeziehung gesetzt werden.

Nach einer erfolgreich durchgeführten Finanzwert-übertragung sendet die Kontoführungseinrichtung 18 über einen Pfad 22 eine Bestätigung in Form einer SMS-Nachricht an das Mobiltelefon 8 oder das Mobiltelefon 9. Die Kontoführungseinrichtung 18 wirkt hier als SMS-Nachrichtenquelle für die Textmitteilungszentrale 12.

Mit Hilfe des Pfades 22 kann die Kontoführungseinrichtung 18 auch zunächst eine rückfragende SMS-Nachricht an das Mobiltelefon 8 absetzen und erst nach Empfangen einer bestätigenden SMS-Nachricht die Finanzwertübertragung durchführen. Auch kann auf eine gleichartige Bestätigung des Empfängers des Mobiltelefons 9 gewartet werden. Alternativ oder zusätzlich kann eine Zeitspanne vorgesehen werden, innerhalb derer stornierende SMS-Nachrichten empfangen werden können oder bestätigende SMS-Nachrichten empfangen werden müssen, wie später noch näher erläutert wird.

Die Kennung $, welche eine SMS-Nachricht als finanzwertbehaftet ausweist, kann auch im Adreßteil 15 enthalten sein. Mit 14' ist eine solche alternative Ausführungsform einer SMS-Nachricht bezeichnet. Der Adreßteil 15 enthält hier eine kombinierte Angabe aus Adresse B° des Mobiltelefones 9 und Finanzwertkennung $. Die kombinierte Angabe B°$ kann z.B. durch die Telefonnummer des Adressaten gebildet werden, ergänzt durch eine spezielle Nebenstellen-Durchwahl, welche die SMS-Nachricht 14' als finanzwertbehaftet kennzeichnet und gleichzeitig die Höhe des Finanzwertes $ angibt. So kann beispielsweise das Senden einer SMS-Nachricht 14' an die Telefonnummer 12345678-90 einen Finanzwert in der Höhe von "90" Euro angeben, welcher an das Konto 20 eines Adressaten mit der Telefonnummer "12345678" übertragen wird.

Die SMS-Nachricht 14' kann - z.B. im Textteil 16 - auch einen persönlichen Code PIN des sendenden Teilnehmers enthalten. Die Detektionseinrichtung 17 und/oder die Kontoführungseinrichtung 18 verifiziert den Code PIN durch Vergleich mit einer entsprechenden Datenbank aller Teilnehmer und ihrer Codes und führt die Finanzwertübertragung nur im Verifizierungsfalle durch.

Wie anhand der SMS-Nachricht 14' gezeigt, können finanzwertbehaftete SMS-Nachrichten nicht nur von Mobiltelefonen 8 aus gesendet werden, sondern von jeder beliebigen SMS-Nachrichtenquelle, z.B. dem Computer 13. Auch der Empfang von SMS-Nachrichten 14, 14' ist mit anderen Mitteln als den gezeigten Mobiltelefonen 9 möglich, z.B. mittels des Festnetztelefons 10 z.B. in Verbindung mit einem Sprachausgabemodul im öffentlichen Telefonnetz 3 oder mittels des Computers 11.

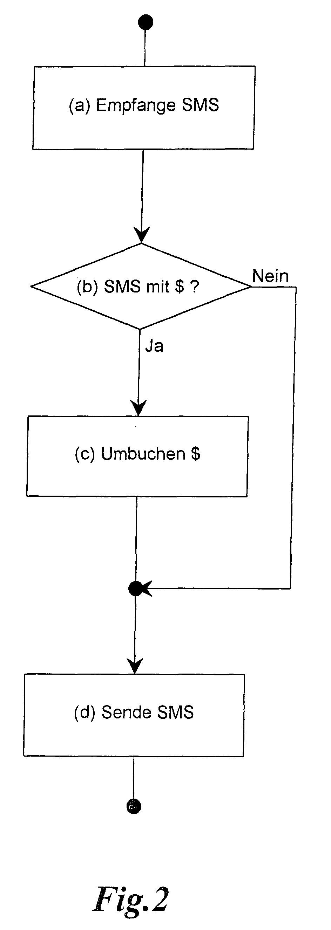

Fig. 2 zeigt eine einfache Variante des Verfahrens der Erfindung, das beispielsweise mit Hilfe der Vorrichtung von Fig. 1 ausgeführt werden kann.

In einem ersten Schritt (a) wird eine SMS-Nachricht empfangen. In einem Schritt (b) wird überprüft, ob die SMS-Nachricht eine Kennung aufweist, die sie als eine solche SMS-Nachricht ausweist, welche einen Finanzwert $ darstellt. Wenn ja, wird in einem Schritt (c) der entsprechende Finanzwert $ vom Konto des Senders der SMS-Nachricht auf das Konto des Empfängers übertragen. Anschließend wird in einem Schritt (d) die SMS-Nachricht an den Empfänger weitergeleitet.

Wenn der Test im Schritt (b) ergibt, daß es sich um eine "normale" SMS-Nachricht handelt, d.h. die keinen Finanzwert darstellt, wird sofort zum Schritt (d) verzweigt.

Es versteht sich, daß der Schritt (d) z.B. auch vor dem Schritt (b) und der Test in Schritt (b) anhand einer Aufzeichnung der weitergeleiteten SMS-Nachricht durchgeführt werden kann.

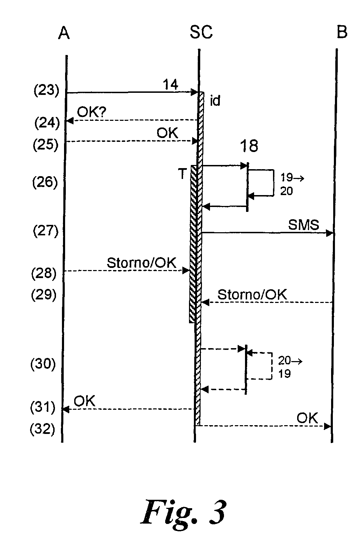

Fig. 3 zeigt in einem Sequenz- und Interaktionsdiagramm mehrere alternative Verfahrensvarianten der Erfindung. Mit A ist der Ort des sendenden Teilnehmers bezeichnet, mit SC der Ort der Textmitteilungszentrale 12 und mit B der Ort des empfangenden Teilnehmers.

In einem ersten Schritt 23 wird eine einen Finanzwert darstellende SMS-Nachricht 14 vom Sender A zur Textmitteilungszentrale SC gesendet. In einem Schritt 24 sendet diese (bzw. die Detektionseinrichtung 17 oder auch die Kontoführungseinrichtung 18) eine rückfragende SMS-Nachricht "OK?" an den Sender A. Dieser antwortet mit einer bestätigenden SMS-Nachricht "OK".

Es versteht sich, daß die rückfragende SMS-Nachricht "OK?" z.B. mit einem eindeutigen Identifikationscode id versehen sein kann, welcher auch in der bestätigenden SMS-Nachricht "OK" zurückgesandt werden muß, um am Ort SC einen Konnex zwischen Rückfrage und Bestätigung herstellen zu können. Der Identifikationscode id kann z.B. die Kennung eines Prozesses sein, welcher in der Textmitteilungszentrale 12, der Detektionseinrichtung 17 und/oder der Kontoführungseinrichtung 18 für die Dauer des in Fig. 3 dargestellten Ablaufes einer Transaktion für diese angelegt wird.

In einem Schritt 26 veranlaßt nun die Textmitteilungszentrale 12 die Kontoführungseinrichtung 18 zur Umbuchung des Finanzwertes $ der SMS-Nachricht 14 vom Senderkonto 19 zum Empfängerkonto 20. Davor, gleichzeitig oder danach wird die SMS-Nachricht 14 auch an den Empfänger B weitergeleitet (Schritt 27).

Innerhalb einer vorgegebenen Zeitspanne T nach Empfang der SMS-Nachricht 14, der bestätigenden SMS-Nachricht "OK" oder der Umbuchung im Schritt 26 können stornierende SMS-Nachrichten "Storno" sowohl vom Sender A (Schritt 28) als auch vom Empfänger B (Schritt 29) empfangen werden. Die stornierende SMS-Nachricht "Storno" enthält z.B. eine spezielle Kennung für den Stornierungsbefehl hinsichtlich der SMS-Nachricht 14, z.B. die Prozeßidentifikation id. Der Stornierungsbefehl wird von der Detektionseinrichtung 17 detektiert und im Detektionsfall wird in einem Schritt 30 ein entsprechendes Rückübertragen des Finanzwertes $ vom Empfängerkonto 20 zum Senderkonto 19 veranlaßt.

Alternativ kann während der Zeitspanne T in den Schritten 28 und 29 auf eine bestätigende SMS-Nachricht "OK" gewartet werden, und die Finanzwertübertragung im Schritt 26 wird erst nach deren Empfang durchgeführt.

In Schritten 31 und 32 können bestätigende SMS-Nachrichten "OK" an den Sender A und/oder den Empfänger B gesandt werden, welche die erfolgreiche Durchführung der Finanzwertübertragung des Schrittes 26 oder der Rückübertragung des Schrittes 30 bestätigen.

Es versteht sich, daß die in Fig. 1 dargestellten Komponenten der Vorrichtung oder die in den Fig. 2 und 3 dargestellten Verfahrensschritte sowohl mittels Hardware realisiert als auch mittels Software implementiert werden können. Auch eine Mischung von Hard- und Softwarekomponenten ist möglich. Demgemäß kann das Blockschaltbild von Figur 1 auch als Objekt- oder Komponentendiagramm eines entsprechenden Computerprogrammes betrachtet werden, wobei die einzelnen Zeichnungselemente für jene Computerprogrammelemente stehen, welche die jeweils oben erörterten Funktionalitäten implementieren.

## Patentansprüche

1. Vorrichtung zur Übertragung von Finanzwerten ($) zwischen Teilnehmern (A, B) eines Telekommunikationsnetzes (1), das zumindest ein Mobilfunknetz (2) umfaßt, in welchem Textmitteilungen (14, 14') auf ihrem Weg vom sendenden Teilnehmer (A) zum empfangenden Teilnehmer (B) eine Textmitteilungszentrale (12, SC) des Mobilfunknetzes (2) durchlaufen, mit einer Kontoführungseinrichtung (18), welche den Teilnehmern (A, B) Konten (19, 20) für Finanzwerte ($) in Eigentümerbeziehung zuordnet, **gekennzeichnet durch** eine Detektionseinrichtung (17), die den Durchlauf (17') der Textmitteilungen (14, 14'), **durch** die Textmitteilungszentrale (12) überwacht, eine vorgebbare Kennung ($) einer Textmitteilung detektiert, und im Detektionsfall die Kontoführungseinrichtung (18) zu einer Übertragung eines vorgebbaren Finanzwertes ($) vom Konto (19) des diese Textmitteilung (14, 14') sendenden Teilnehmers (A) zum Konto (20) des diese Textmitteilung empfangenden Teilnehmers (B) ansteuert.

2. Vorrichtung nach Anspruch 1, **dadurch gekennzeichnet, daß** das Mobilfunknetz (2) ein GSM-System ist, die Textmitteilungen (14, 14') SMS-Nachrichten des GSM-Systems sind, und die Textmitteilungszentrale (12) die SMS-Dienstzentrale des GSM-Systems ist.

3. Vorrichtung nach Anspruch 1 oder 2, bei welcher das Telekommunikationsnetz oder das Mobilfunknetz von den Teilnehmern Gebühren einhebt und dazu eine Kontoführungseinrichtung für Gebührenkonten aufweist, **dadurch gekennzeichnet, daß** die Kontoführungseinrichtung (18) für die Finanzwertkonten (19, 20) durch die Kontoführungseinrichtung für die Gebührenkonten gebildet ist.

4. Vorrichtung nach einem der Ansprüche 1 bis 3, **dadurch gekennzeichnet, daß** die Kennung ($) im Textteil (16) der Textmitteilung (14) enthalten ist.

5. Vorrichtung nach einem der Ansprüche 1 bis 3, **dadurch gekennzeichnet, daß** die Kennung ($) im Adreßteil (15) der Textmitteilung (14') enthalten ist.

6. Vorrichtung nach einem der Ansprüche 1 bis 5, **dadurch gekennzeichnet, daß** der Finanzwert ($) durch den Textteil (16) der Textmitteilung (14) vorgegeben ist.

7. Vorrichtung nach einem der Ansprüche 1 bis 5, **dadurch gekennzeichnet, daß** der Finanzwert ($) durch den Adreßteil (15) der Textmitteilung (14') vorgegeben ist.

8. Verfahren zum Übertragen von Finanzwerten ($) zwischen Teilnehmern (A, B) eines Telekommunikationsnetzes (1), das zumindest ein Mobilfunknetz (2) umfaßt, in welchem Textmitteilungen (14, 14') auf ihrem Weg vom sendenden Teilnehmer (A) zum empfangenden Teilnehmer (B) eine Textmitteilungszentrale (12, SC) des Mobilfunknetzes (2) durchlaufen, wobei den Teilnehmern (A, B) Konten (19, 20) für Finanzwerte ($) in Eigentümerbeziehung zugeordnet werden, **gekennzeichnet durch** die Schritte:
(a) Empfangen einer Textmitteilung (14, 14') in der Textmitteilungszentrale (12),
(b) Detektieren einer vorgebbaren Kennung ($) in der empfangenen Textmitteilung (14, 14'), und
(c) im Detektionsfalle, Übertragen eines vorgebbaren Finanzwertes ($) vom Konto (19) des diese Textmitteilung (14, 14') sendenden Teilnehmers (A) zum Konto (20) des diese Textmitteilung (14, 14') empfangenden Teilnehmers (B) .

9. Verfahren nach Anspruch 8, **dadurch gekennzeichnet, daß** die Textmitteilung (14, 14') einen persönlichen Code (PIN) des sendenden Teilnehmers (A) umfaßt und das genannte Übertragen nur nach einem Detektieren und erfolgreichen Verifizieren des Codes (PIN) durchgeführt wird.

10. Verfahren nach Anspruch 8 oder 9, **dadurch gekennzeichnet, daß** das genannte Übertragen nur nach vorherigem Senden (24) einer rückfragenden Textmitteilung und Empfangen (25) einer bestätigenden Textmitteilung vom genannten sendenden und/oder empfangenden Teilnehmer (A, B) durchgeführt wird.

11. Verfahren nach einem der Ansprüche 8 bis 10, **gekennzeichnet durch** die weiteren Schritte
- Empfangen (28, 29) einer weiteren Textmitteilung in der Textmitteilungszentrale (12),
- Detektieren eines in der weiteren Textmitteilung enthaltenen Stornierungsbefehles hinsichtlich der genannten Textmitteilung, und
- im Detektionsfalle, Rückübertragen des genannten Finanzwertes ($) vom Konto (20) des genannten empfangenden Teilnehmers (B) zum Konto (19) des genannten sendenden Teilnehmers (A) .

12. Verfahren nach Anspruch 11, **dadurch gekennzeichnet, daß** das genannte Rückübertragen nur innerhalb einer vorgegebenen Zeitspanne (T) im Anschluß an das Empfangen (23) der genannten Textmitteilung (14, 14') durchgeführt wird.

13. Verfahren nach einem der Ansprüche 8 bis 12, **gekennzeichnet durch** den weiteren Schritt des Sendens (31, 32) einer Bestätigung über das durchgeführte Übertragen oder Rückübertragen an den sendenden und/oder empfangenden Teilnehmer (A, B) in Form einer Textmitteilung.

14. Verfahren nach einem der Ansprüche 8 bis 13, **dadurch gekennzeichnet, daß** das Mobilfunknetz (2) ein GSM-System ist, die Textmitteilungen SMS-Nachrichten des GSM-Systems sind, und das Detektieren in der SMS-Dienstzentrale (12) des GSM-Systems durchgeführt wird.

15. Verfahren nach einem der Ansprüche 8 bis 14, **dadurch gekennzeichnet, daß** die Kennung ($) im Textteil (16) der Textmitteilung (14) enthalten ist.

16. Verfahren nach einem der Ansprüche 8 bis 14, **dadurch gekennzeichnet, daß** die Kennung ($) im Adreßteil (15) der Textmitteilung (14') enthalten ist.

17. Verfahren nach einem der Ansprüche 8 bis 16, **dadurch gekennzeichnet, daß** der Finanzwert ($) im Textteil (16) der Textmitteilung (14) vorgegeben wird.

18. Verfahren nach einem der Ansprüche 8 bis 16, **dadurch gekennzeichnet, daß** der Finanzwert ($) im Adreßteil (15) der Textmitteilung (14') vorgegeben wird.

19. Computerprogramm, implementierend eine Vorrichtung nach einem der Ansprüche 1 bis 7.

20. Computerprogramm, implementierend ein Verfahren nach einem der Ansprüche 8 bis 18.
